# EUROPEAN PATENT APPLICATION

(11) **EP 1 226 997 A2**
(43) Date of publication of application: **31.07.2002**
(21) Application number: 02425020.1
(22) Date of filing: 22.01.2002
(51) Int. Cl.: B60M 1/13, B60L 5/42

(54) **Trolleybus power supply system based upon a trolley with traverse rods and a aerial single line with alternating poles**

(30) Priority: 25.01.2001 IT RM010036; 05.07.2001 IT RM010397; 05.07.2001 IT RM010398
(71) Applicant: Natali, Gian Luca, 00133 Roma (IT)
(72) Inventor: Natali, Gian Luca, 00133 Roma (IT)

(57) **Abstract**

Trolleybuses, by definition, use a pair of aerial wires and a trolley to draw electrical power from a remote generator. The double-wired lines and the relative trolleys, designed to contact the poles of the aerial line, present some disadvantages that up to now have greatly limited their use and diffusion. Those drawbacks can be summarized in fixed paths, landscape pollution, and complex handlings to recover the electrical contact between the trolley and the line after any interruption.

The solutions described in this patent overcome those drawbacks.

To supply electrical power to a trolleybus, a peculiar trolley, with two or four traverse elements collecting electrical power from a special aerial single line, is proposed. This special aerial line presents the two poles of a remote generator, periodically alternated along the single line path.

Moreover, the proposed solutions suggest an application that applied to a trolleybus powered by common bifilar wire line, enhance their performances and it allows the use of existing bifilar aerial lines, saving large amounts of money.

## Description

**Background. -** Until now trolleybuses use, in order to draw the electrical power, a bifilar aerial wire line, carrying the two polarities of a remote generator, and a trolley equipped with two articulated poles guided by the aerial wire line itself. This system involves several drawbacks, that have limited the diffusion of trolleybuses in modern public transport. In spite of the developments, either mechanical or electronic, that enhanced the correct contact between the trolley poles and the corresponding polarities of the aerial pair wires, the deployment of the trolley after every contact interruption has to be done with a stationary vehicle, either manually or with the aid of complex electromechanical devices.

Moreover the aerial pair wire lines represent an important landscape pollution in the historical towns centre, mainly due to aerial exchanges and crossings.

The present patent concerns a power supply system for trolleybuses, composed by a special single aerial line, carrying both poles of a remote generator, and a trolley equipped with traverse rods. Both the solutions overcome the described drawbacks, allowing a more flexible system for electric public transport.

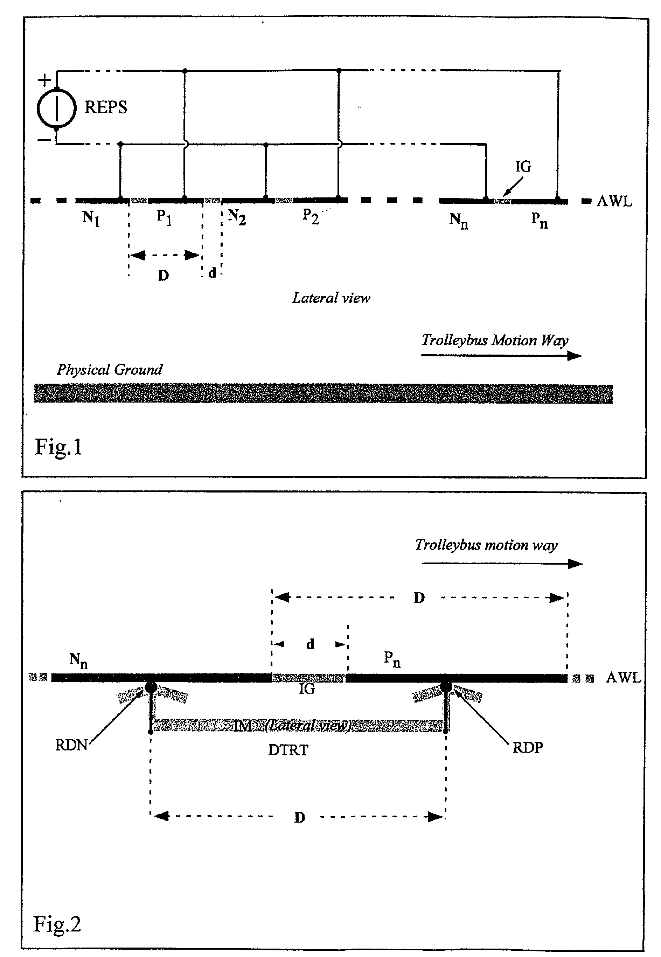

**Description. -** The first component of the proposed power supply system consists of a single aerial wire line Fig.1 (AWL), which is composed by a sequence of pairs of conductive segments Fig.1 (N₁, P₁; N₂, P₂; N₃, P₃; ...Nₙ, Pₙ).

Each segment is (**D - d** ) long (e.g. 1 *m*), and every segment is separated from the following by an insulating gap Fig.1 (IG) of length **d**. Moreover each **N** segment is connected to a pole of the Remote Electrical Power Supply Fig.1 (REPS) and each **P** segment is connected to the other pole. With such a configuration the two polarities present themselves alternately along the path during the trolleybus motion.

The trolley in his upper side, is made of two single-segment parallel rods Fig.2 (RDN, RDP), insulated from each other, lying perpendicularly across the Aerial Wire Line Fig.2 (AWL). The traverse rods are set, through an electric insulating mounting Fig.2 (IM), at the distance **D**, equal to the interval between the starting points of contiguous segments Fig.2 (Nₙ, Pₙ) of the aerial wire line. The rods' length, affecting only the lateral displacements possible for the vehicle, can be as large as the the total width of the trolleybus.

During the vehicle motion along the aerial line path, each rod touches alternately the two poles of the remote power supply generator and, at the same time, the other rod touches the complementary pole.

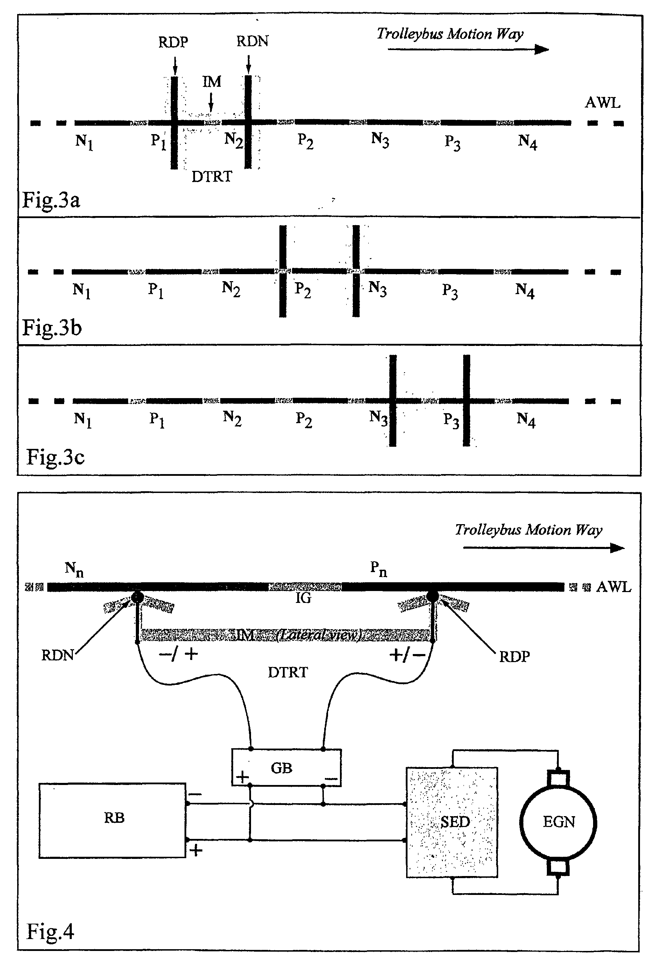

Setting the rod's width smaller than the insulating gap **d**, each rod cannot touch different poles at the same time. Fig.3a, Fig.3b and Fig.3c show, in a temporal sequence, the positions of this Double Traverse Rod Trolley Fig.3 (DTRT) referred to the aerial wire line Fig.3 (AWL).

In order to power a common D.C. engine Fig.4 (EGN), a diode bridge (*Graetz Bridge*) Fig.4 (GB), rectifies the alternating current due to the vehicle motion. Speed and motion of the engine can be controlled with a common switching electronic device Fig.4 (SED). With this configuration the vehicle is able to use either a D.C. or an A.C. remote power generator, the latter solution representing a well-known advantage.

Moreover, connecting the outputs of the Graetz bridge in parallel with a Rechargeable Battery set Fig.4 (RB) a bi-modal equipment is obtained. It is well known that bi-modal systems present several advantages, such as simplifying buses' movement in and out the depots, or avoiding the line wiring in the historical town centres, limiting the line wiring to the suburbs.

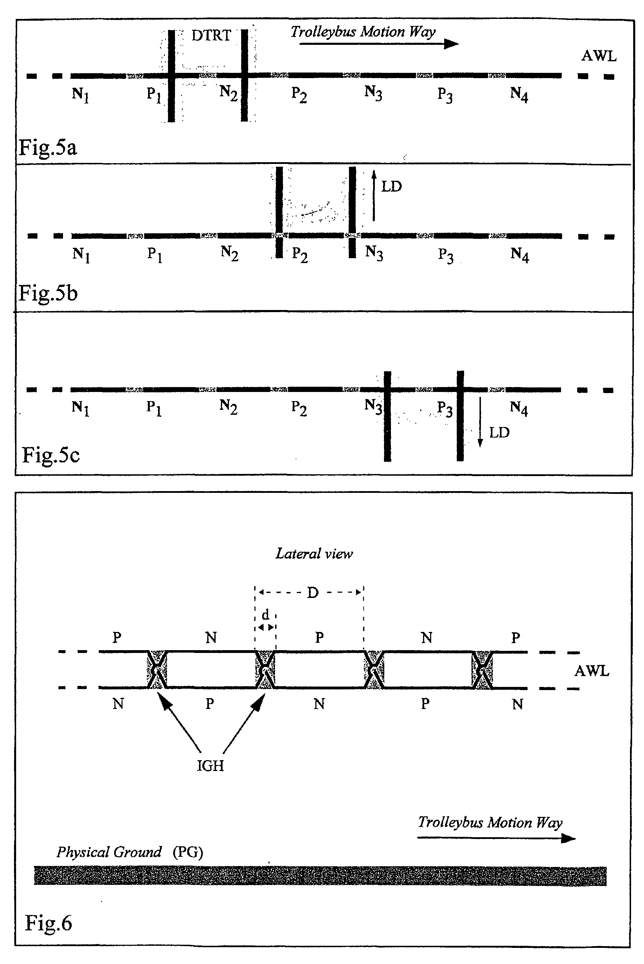

Commonly, the trolley system for trolleybuses needs a guiding system either mechanical or electronic, to ensure contact with the aerial wire line. On the contrary, the trolley here described works as a tramway trolley Fig.5a (DTRT): as outlined in Fig.5a, Fig.5b, Fig.5c it allows lateral displacements, as large as the rod's length, referred to the aerial wire path Fig.5b (LD) and Fig.5c (LD), without any mechanical or electronic guiding.

The special alternate polarities aerial single line, can be built with two wires superimposed one upon the other, inverting their reciprocal position referred to the Physical Ground Fig.6 (PG) every **D** distance. Insulated d-long gap holders Fig.6 (IGH), placed in sequence at distance **D,** work as insulators and mechanical separation bearings for the two wires. Connecting the two wires to the remote power generator poles, this aerial single line will supply the electrical power to the trolleybus equipped with a Double Traverse Rods Trolley.

The described trolley, during the motion of the trolleybus, undergoes periodical blackouts of the electrical power, due to the passage of the rods through the insulating gaps. This disadvantage is not a true problem, for the accumulators can supply the electrical power during the short lacks of contact between the rods and the conductive elements of the aerial line and recharge themselves while the rods do contact the conductive elements.

However, to overcome this disadvantage, the Double Traverse Rods Trolley can be transformed in a Quadruple Traverse Rods Trolley.

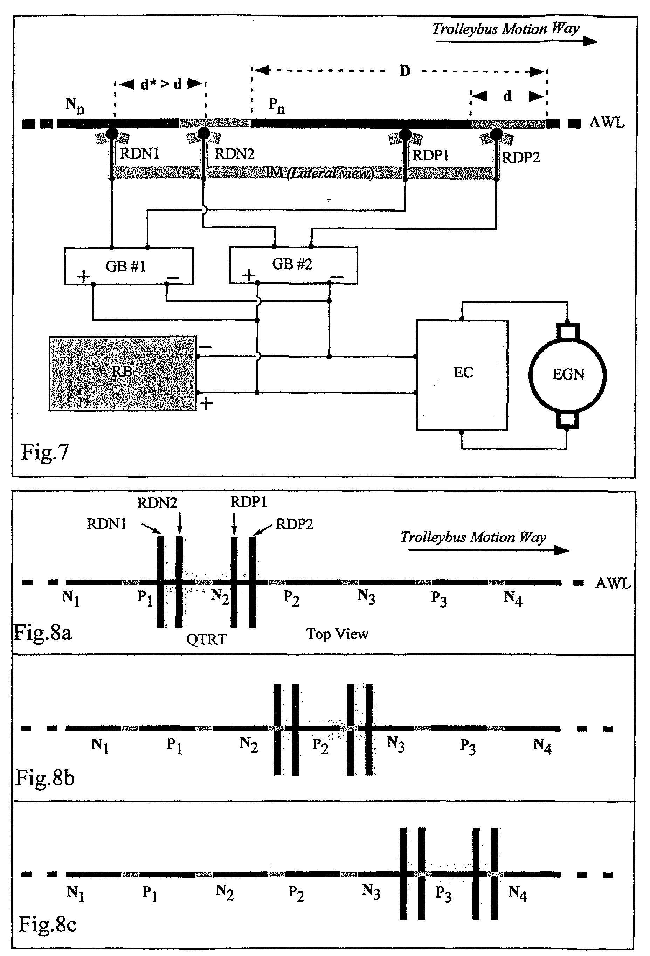

The latter is composed by two equipments similar to the Double Traverse Rods Trolley, shifted each other by a length **d*** along the path of the aerial line, and held jointly by the same insulating mounting Fig.7 (IM).

Fixing the length **d*** of the shift smaller than the distance **D** and greater than the insulating gap **d**, at least one pair of rods Fig.7 (RDN1), and Fig.7 (RDP1), or Fig.7 (RDN2), and Fig.7 (RDP2) will be in electrical contact with the two poles of the aerial wire line during the vehicle motion.

In this new configuration, connecting each pair of rods composing the Quadruple Traverse Rods Trolley to two different Graetz bridges Fig.7 (GB#1), Fig.7 (GB#2), and connecting in parallel the homologous outputs of the bridges, no lack of electrical power supply will ever occur to the engine or to the rechargeable batteries during the vehicle motion, so avoiding extracurrents damage both to the trolley rods and the electrical elements of the aerial line wire.

In Fig.8a, Fig.8b and Fig.8c the different positions of the QTRT rods during the trolleybus motion, referred to the alternating poles of the aerial wire line, are shown. In every position at least one of the elementary DTRT pair making up the QTRT is in electrical contact with the two poles of the aerial single line.

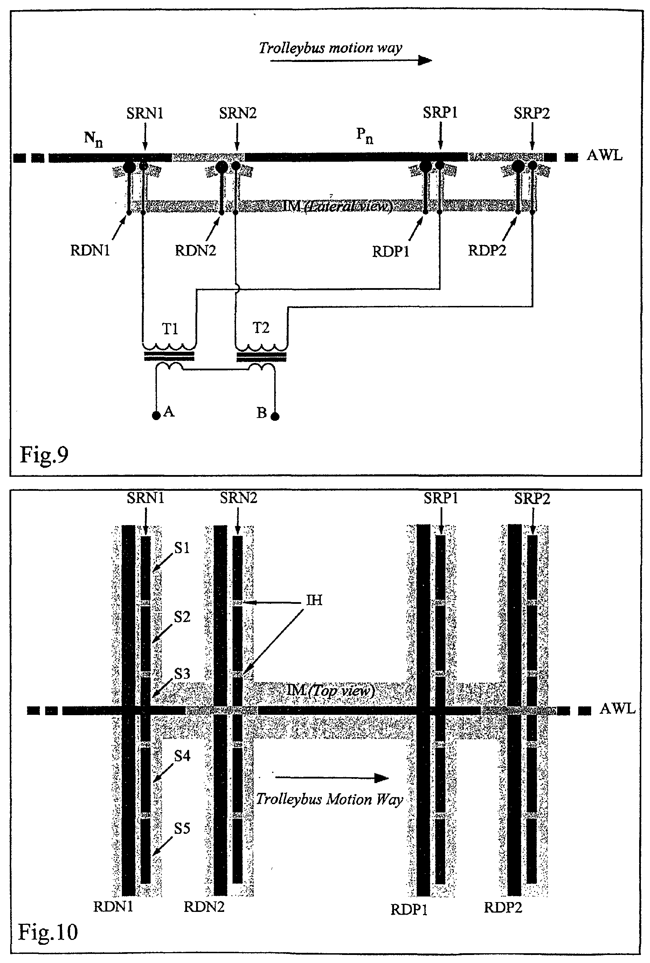

The system described in this patent presents further advantages upon the traditional ones. As electrical contact between the trolley and the aerial wire line is interrupted anyway where the line wiring ends, such as at crossing or at the entrance of unwired routes, sparks between the trolley and the aerial electrical line can damage the trolley and the aerial line. In order to detect the absence of the aerial wire line, secondary rods. parallel to the main rods Fig.9 (SRN1), Fig.9 (SRN2), Fig.9 (SRP1), Fig.9 (SRP2), can be added to the new QTRT. The secondary rods are insulated from the rechargeable batteries and the engine (main users), and connected to an AND electronic circuit: during the motion, the signal revealing the incoming interruption in the main circuits is send to an electronic device, that switches off the current in the main users some milliseconds before the interruption, avoiding the sparks between the trolley and the aerial electrical line and any consequential damage.

At the same time the signal can activate an actuator to lower automatically the trolley to its rest position, and a simple manual switch can rise the trolley back at the beginning of a new aerial wired path, restoring the electrical contacts with the aerial wire line without any mechanical or electronic guiding.

Two small transformers Fig.9 (T1) and Fig.9 (T2), having their secondary windings connected in series, provide a simple circuit to detect the absence of the electrical contacts between the secondary rods of the trolley and any aerial wire line A.C. powered. Zero signal is present at the outputs Fig.9 (A), and Fig.9 (B) only when both the pairs of secondary rods are disconnected from the aerial wire line.

A further possible improvement for the QTRT is the segmentation of the primary or the secondary traverse rods, as shown in Fig. 10. Each secondary rod is composed by a set of conducting elements Fig.10 (S1, S2, S3, S4, S5), separated by an insulated holder Fig.10 (IH). With this design it is possible to pick-up information about the lateral position of the trolley contact, referred to the aerial wire line path, using it to control an actuator to compensate the lateral displacements of the trolleybus, so improving the motion capabilities in a crowed traffic.

Until now I have discussed completely new solutions about both the trolley for trolleybuses and the related aerial single line that supplies the electrical power to the moving vehicle, but some of the concepts here developed can be applied to a common aerial bifilar wire line as well, and can be used where a bifilar wire line already exists, saving large amounts of money.

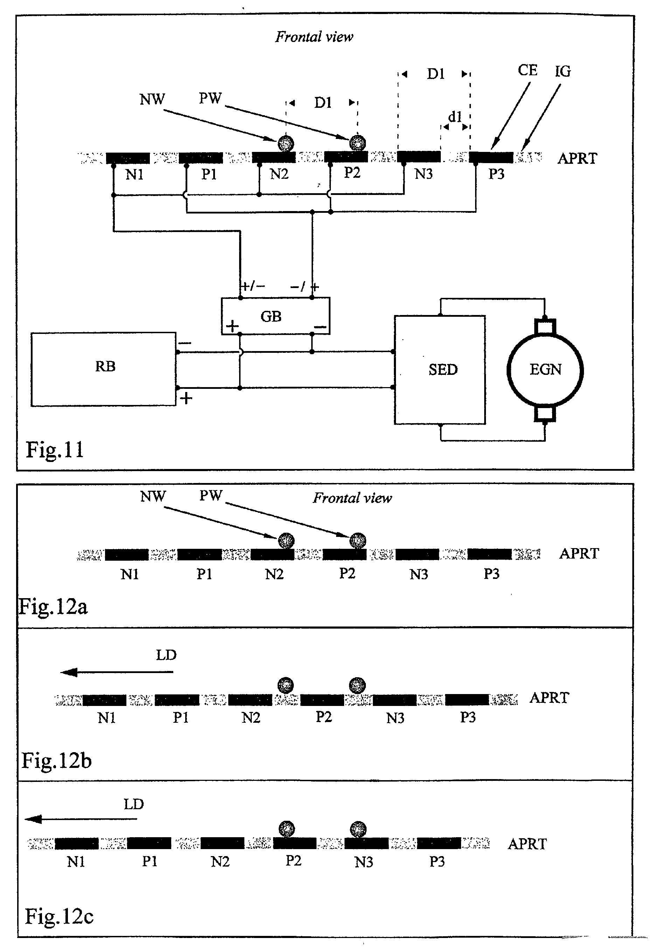

Recalling the proposed solutions, the trolley drawing electrical power from a common bifilar wire line, is composed by a traverse segmented rod Fig.11 (APRT), in which the conductive segments are set, through an electric insulating mounting, at the distance **D1**, equal to the distance between the two wires Fig.11 (WP) and Fig.11 (WN) of the aerial bifilar line.

Setting the length of the insulating gap dl larger (much larger) than the wire width, in spite of lateral displacements of the trolleybus during the motion, each aerial line wire cannot touch two contiguous segments at the same time. As shown in Fig. 11, connecting each set of N or P segments in parallel, and both sets to a Graetz bridge Fig. 11 (GB), the outputs of the bridge present the same polarities whichever is the position between the rod and the aerial bifilar wire line (assuming the contact exists). Such an equipment is able to feed the rechargeable batteries Fig. 11 (RB), the switching electronic device Fig.11 (SED) and the engine Fig.11 (EGN), and does not need any guiding, either mechanical or electronic, to compensate for lateral displacements of the trolleybus during the motion.

Fig.12a, Fig.12b, Fig.12c, show the positions of the segmented rod, referred to the bifilar aerial wire line, for different lateral displacements Fig.12b (LD) and Fig.12c (LD): relative displacements equal to the total length of the traverse rod still keep the trolley in contact with the wires.

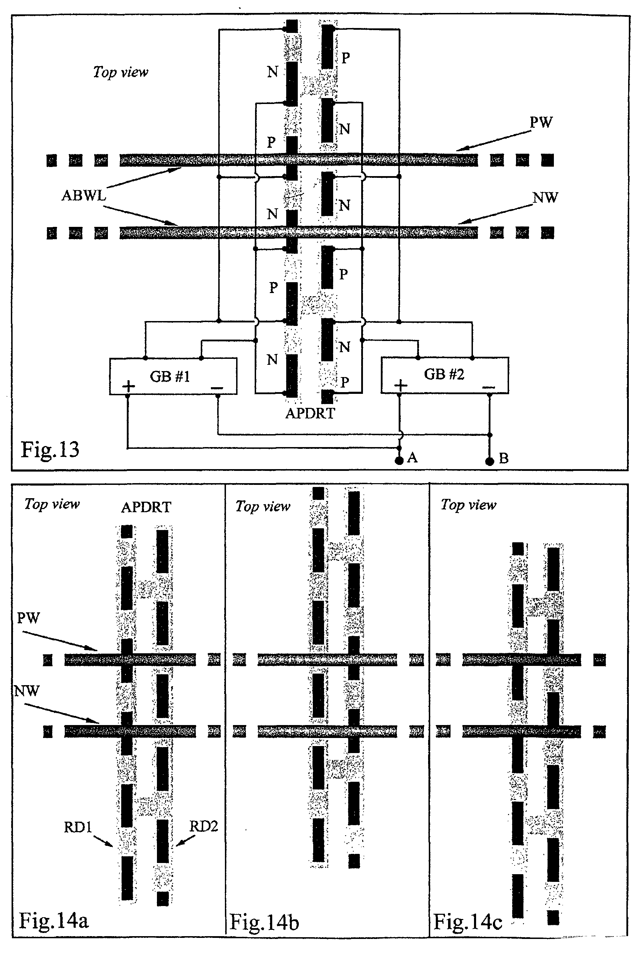

However in this configuration too, lack of electrical supply is present while the insulating gaps of the trolley rod are in contact with the wires of the aerial bifilar line. This drawback can be avoided adding a second rod Fig.13 (RD2), parallel to and at short distance from the first Fig.13 (RD1), having the conductive segments laterally shifted of **(D1)/2** referred to the first one. Connecting the elements of the two rods respectively to two separate Graetz bridges Fig.13 (GB#1) and Fig.13 (GB#2), and connecting in parallel the homologous outputs of the bridges, there are no lacks in the electrical contacts due to the lateral displacements (if it is limited to the rod's length), during to the trolleybus motion along an aerial bifilar wired route.

This solution, as well as the Quadruple Traverse Rod Trolley used for the aerial single line, can be futher improved adding a pair of secondary rods detecting the wire interruption due to unwired paths, and activating an actuator which automatically lowers the trolley in its rest position. The latter improvement is very important for it allows, together to the described bi-modal system, to avoid line wiring at the crossing and in the historical town centres, limiting the landscape pollution.

## Claims

1. The invention of a special aerial single line to supply electrical power to trolleybuses, **characterized by** a regular sequence of conductive segments alternately connected to the two polarities of a remote electrical power generator, and separated each other by an insulated holder. The aerial line presents the two polarities in alternate sequence, referred to the physical ground, along the trolleybus motion path.
The claim is stated independently from any choice of the distance **D** between contiguous conductive segments, from any choice of the width **d** of the insulating gap, from any choice of the materials compounding the wires and the gap holders.

2. The solution invented to carry out an alternate polarities aerial single line, facing the physical ground, AS CLAIMED IN CLAIM 1, starting from two wires superinposed one upon the other, which invert periodically their relative positions every distance **D,** and are held by insulator bearings set at the same distance **D** of the inverting period. The insulator bearings are designed to held everywhere separate the two poles, and to avoid electrical contact between the two polarities where each wire crosses the other inverting the reciprocal positions.
The claim is stated independently from any choice of the materials compounding the wires and the insulating bearings, from any choice of the specific distance **D** of the polarities invention and from any geometrical solution of the insulating bearings.

3. The invention of the Double Traverse Rods Trolley, acting as electrical collector joining to the single alternated segments aerial line, AS CLAIMED IN CLAIM 1, equipped with two single segment parallel rods, which lie perpendicularly across the aerial wire-line and, through an electric insulating mounting, are set at the distance **D,** equal to the interval between the starting points of contiguous elements of the aerial single line. To correctly power the motion devices of the trolleybus, each rod of the Double Traverse Rods Trolley has to be connected to a Graetz bridge ***(prior art portion)*** in order to rectify the alternate current, and the rods width has to be much smaller than the insulating gap **d** between the elements of the aerial single line AS CLAIMED IN CLAIM 1.
The claim is stated independently from any choice of both the width and the length of the rods, from any geometrical shape of the single rod, from any choice of the materials compounding the rods and the insulating mounting and from any electronic device added to the Graetz bridge or sostituting them.

4. The invention of a Quadruple Traverse Rods Trolley composed by two trolleys similar to the Double Traverse Rods Trolley AS CLAIMED IN CLAIM 3, shifted each other by a length **d*,** along the path of the aerial single line AS CLAIMED IN CLAIM 1, and held by the same insulating mounting. The length **d*** of the shift has to be fixed smaller than the distance **D** and greater than the insulating gap **d** of the aerial single line AS CLAIMED IN CLAIM 1, so that, during the vehicle motion, at least one pair of rods Fig.7 (RDN1) and Fig.7 (RDP1), or Fig.7 (RDN2) and Fig.7 (RDP2), will be in electrical contact with the two poles of the aerial single line AS CLAIMED IN CLAIM 1.
To complete the invention each single elementary trolley constituent the Quadruple Traverse Rods Trolley has to be connected to two different Graetz bridges Fig.7 (GB #1) and Fig.7 (GB #2), with the homologous outputs connected in parallel in order to avoid any lack of electrical contact, and provide a more efficient power supply to the engine and the rechargeable batteries of the trolleybus.
The claim is stated independently from any choice of the value of the shift between the single Double Traverse Rods Trolley constituting the Quadruple Traverse Rods Trolley, from any choice of the number of pairs of rods composing the trolley and from any electronic device added to the two Graetz bridges or sostituting them.

5. The invention of the secondary rods, set parallel to the main rods of the Double Traverse Rods Trolley AS CLAIMED IN CLAIM 3, or of the Quadruple Traverse Rods Trolley AS CLAIMED IN CLAIM 4, connected to an electronic circuit capable of detecting the interruption of the electrical contacts due to unwired paths, and acting on an electronic switch in order to drop the current in the main power device before the incoming event, avoiding sparks and damages in the rods and in the aerial single line AS CLAIMED IN CLAIM 1.
The claim is stated independently from any shape of the secondary rods

6. The invention of the segmentation of the secondary rods AS CLAIMED IN CLAIM 5, in order to pick-up from every segment a signal revealing the relative lateral position between the Double Traverse Rods Trolley AS CLAIMED IN CLAIM 3, or the Quadruple Traverse Rods Trolley AS CLAIMED IN CLAIM 4, and the aerial single line AS CLAIMED IN CLAIM 1, in order to control an actuator capable of correcting the transversal relative positions.
The claim is stated independently from any specific way to either detect or process the signal and from any choice of the specific actuator's control.

7. The invention of a Double Segmented Traverse Rods Trolley to collect electrical power from traditional bifilar aerial wire-line in which two rods are fixed on the same insulating mounting sequentially along the path of the aerial line. Each rod is composed by conductive segments, separated each other by an insulating gap **d1** much larger than the diameter of the wires constituting the bifilar electrical aerial line. The distance **D1** between two contiguous conductive segments of the same rod can be set in such a way that each rod is composed by more than 4 or 5 segments covering the whole rod length.
The conductive elements of the two rods have to be shifted each other of a distance equal to **(D1)/2,** being **D1** the distance between the two starting point (or ending point) of two contiguous segments of the same rod.
The claim is stated independently from any choice of the distance **D1,** from any choice of the number of segments composing the rods and from any number of rods more than two.
